# EUROPEAN PATENT APPLICATION

(11) **EP 3 261 036 A1**
(43) Date of publication of application: **27.12.2017**
(21) Application number: 17176647.0
(22) Date of filing: 19.06.2017
(51) Int. Cl.: G06Q 20/20

(54) **ACCOUNTING SYSTEM, INFORMATION PROCESSING APPARATUS, AND CONTROL PROGRAM**

(30) Priority: 20.06.2016 JP 2016121538
(71) Applicant: Toshiba TEC Kabushiki Kaisha, Tokyo 141-8562 (JP)
(72) Inventor: GOJO, Yoshimasa, Shinagawa-ku, Tokyo 141-8562 (JP)
(74) Representative: Takeuchi, Maya

(57) **Abstract**

An accounting system according to a first embodiment includes a receipt printer that receives transaction information including character strings representing details of a transaction. The receipt printer generates and transmits electronic receipt data which includes a set of character codes that represents at least one of the character strings included in the transaction information. An information processing apparatus receives the electronic receipt data transmitted from the receipt printer, determines a category of the at least one of the character strings represented by the set of character codes included in the electronic receipt data received from the receipt printer, stores the set of character codes included in the electronic receipt data received from the receipt printer in association with the determined category, and displays details of the transaction including the determined category.

## Description

### FIELD

The present invention relates to receipt service technologies in general, and embodiments described herein relate in particular to an accounting system, an information processing apparatus, and a control program.

### BACKGROUND

In an electronic receipt service, electronic receipt information relating to a transaction that a user of a service carries out is retained in an electronic receipt server. The user is able to access the electronic receipt server from any information terminal, thereby making it possible for the user to view a receipt from any location.

However, in order to provide the electronic receipt service so that the user is able to easily use the electronic receipt service, large-scale equipment items such as a high-performance electronic receipt server are needed.

To this end, there is provided an accounting system comprising:
a receipt printer having a first processor, a printing unit, and one or more first communication interfaces, the first processor being configured to control the printing unit and the one or more first communication interfaces to:
   receive transaction information including character strings representing details of a transaction,
   determine a method of outputting a receipt of the transaction from one of at least a first method and a second method,
   if the determined method of outputting is the first method, print a receipt of the transaction, including the character strings, on a printing medium, and
   if the determined method of outputting is the second method, generate and transmit electronic receipt data which includes a set of character codes that represents at least one of the character strings included in the transaction information; and
an information processing apparatus having a second processor, a storage unit, a display, and one or more second communication interfaces, the second processor being configured to control the storage unit, the display, and the one or more second communication interfaces to:
   receive the electronic receipt data transmitted from the receipt printer,
   determine a category of the at least one of the character strings represented by the set of character codes included in the electronic receipt data received from the receipt printer,
   store the set of character codes included in the electronic receipt data received from the receipt printer in association with the determined category, and
   display details of the transaction including the determined category.

Preferably, the one or more first communication interfaces include:
a network interface through which the transaction information is received, and
a wireless interface through which the electronic receipt data is received.

In the above system, the wireless interface is preferably a circuit configured in accordance with a near field communication standard.

Preferably still, the storage unit stores a pattern matching database which stores categories in association with character strings, and
the second processor searches the pattern matching database to determine the category of the at least one of the character strings represented by the set of character codes included in the electronic receipt data received from the receipt printer.

Preferably yet, in response to an input selecting the determined category, the second processor controls the display to display a detail of a previous transaction based on previous electronic receipt data.

Also in the above system, the information processing apparatus is preferably a smart phone.

Suitably, the second processor determines the category by communicating with a server that stores a pattern matching database which stores categories in association with character strings.

The invention also relates to an information processing apparatus comprising:
a processor;
a storage unit;
a display; and
one or more first communication interfaces, the processor being configured to control the storage unit, the display, and the one or more first communication interfaces to:
   request electronic receipt data representing a transaction,
   in response to the request, receive the electronic receipt data which includes a set of character codes that represents at least one of a plurality of character strings representing details of the transaction,
   determine a category of the at least one of the plurality of character strings represented by the set of character codes included in the received electronic receipt data,
   store the set of character codes included in the received electronic receipt data in association with the determined category, and
   display details of the transaction including the determined category.

Suitably, the one or more first communication interfaces include a wireless interface through which the electronic receipt data is received.

In the above information processing apparatus, the wireless interface is preferably a circuit configured in accordance with a near field communication standard.

Suitably still, the storage unit stores a pattern matching database which stores categories in association with character strings, and the processor searches the pattern matching database to determine the category of the at least one of the character strings represented by the set of character codes included in the received electronic receipt data.

Suitably yet, in response to an input selecting the determined category, the processor controls the display to display a detail of a previous transaction based on previous electronic receipt data.

In the above information processing apparatus, the apparatus is preferably a smart phone.

Typically, the processor determines the category by communicating with a server that stores a pattern matching database which stores categories in association with character strings.

The invention further relates to a non-transitory computer-readable medium storing instructions causing an information processing apparatus to perform the steps of:
requesting electronic receipt data representing a transaction;
in response to the request, receiving the electronic receipt data which includes a set of character codes that represents at least one of a plurality of character strings representing details of the transaction;
determining a category of the at least one of the character strings represented by the set of character codes included in the received electronic receipt data;
storing the set of character codes included in the received electronic receipt data in association with the determined category; and
displaying details of the transaction including the determined category.

Preferably, electronic receipt data is requested and received via a wireless interface.

In the above non-transitory computer-readable medium, the wireless interface is preferably a circuit configured in accordance with a near field communication standard.

Preferably still, the instructions further cause the information processing apparatus to perform the step of:
storing a pattern matching database which stores categories in association with character strings, the category being determined by searching the pattern matching database.

Preferably yet, the instructions further cause the information processing apparatus to perform the steps of:
receiving an input selecting the determined category; and
in response to the input, display a detail of a previous transaction based on previous electronic receipt data.

Typically, the information processing device determines the category by communicating with a server that stores a pattern matching database which stores categories in association with character strings.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a perspective diagram illustrating an example accounting system according to an embodiment.
Fig. 2 is a block diagram illustrating an example configuration of a receipt printer in the receipt system.
Fig. 3 is a block diagram illustrating an example configuration of an information terminal in the receipt system.
Fig. 4 is a flowchart of an example sequence of operations performed in the receipt printer.
Fig. 5 illustrates an example of a paper receipt.
Fig. 6 is a flowchart of an example sequence of operations performed in the information terminal.
Fig. 7 is a diagram illustrating an example of a pattern matching database.
Fig. 8 is a flowchart of an example sequence of operations performed in the information terminal.
Fig. 9 illustrates an example transaction detail screen.
Fig. 10 illustrates an example of a list screen.

### DETAILED DESCRIPTION

An accounting system according to a first embodiment includes a receipt printer that receives transaction information including character strings representing details of a transaction. The receipt printer determines a method of outputting a receipt of the transaction from one of at least a first method and a second method. If the determined method of outputting is the first method, the receipt printer prints a receipt of the transaction, including the character strings, on a printing medium. If the determined method of outputting is the second method, the receipt printer generates and transmits electronic receipt data which includes a set of character codes that represents at least one of the character strings included in the transaction information. An information processing apparatus receives the electronic receipt data transmitted from the receipt printer, determines a category of the at least one of the character strings represented by the set of character codes included in the electronic receipt data received from the receipt printer, stores the set of character codes included in the electronic receipt data received from the receipt printer in association with the determined category, and displays details of the transaction including the determined category.

An embodiment will be described below with reference to the drawings.

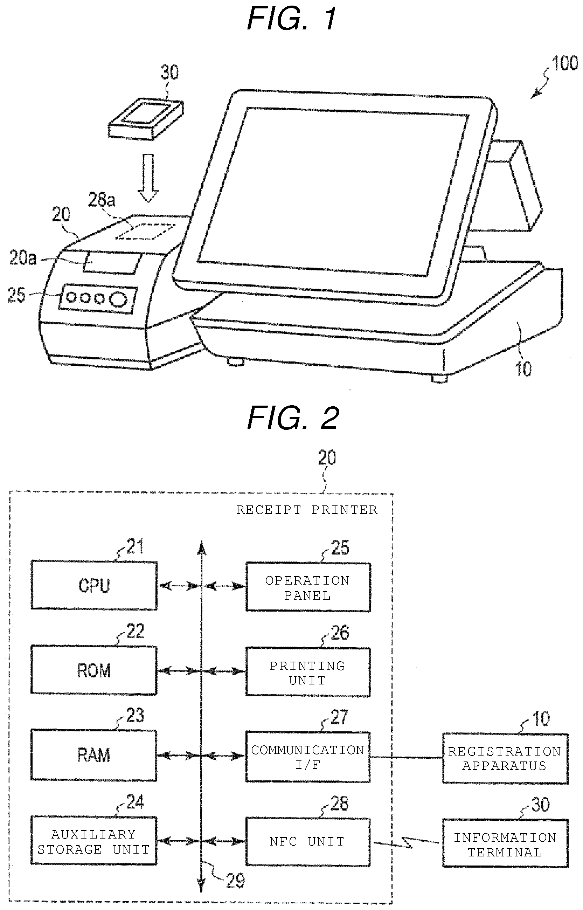

Fig. 1 is a perspective diagram illustrating an example accounting system 100 according to the present embodiment.

The accounting system 100 includes a registration apparatus 10, a receipt printer 20, and an information terminal 30.

The registration apparatus 10 registers details of a transaction. The transaction is typically a sale of merchandise or service(s). As the registration apparatus 10, a point-of-sale (POS) terminal may be used. The registration apparatus 10 requests the receipt printer 20 to issue a receipt which includes the details of the transaction. The receipt printer 20 issues a paper receipt according to a request from the registration apparatus 10, or wirelessly transmits electronic receipt data to the information terminal 30. The information terminal 30 receives the electronic receipt that is wirelessly transmitted by the receipt printer 20 and manages the received electronic receipt. The information terminal 30 may be mobile information terminal. However, as long as the information terminal 30 functions as described herein, any embodiment that realizes the information terminal 30 may be possible. The information terminal 30 is, for example, an information processing apparatus.

Fig. 2 is a block diagram illustrating an example configuration of the receipt printer 20.

The receipt printer 20 includes a central processing unit (CPU) 21, a read-only memory (ROM) 22, a random-access memory (RAM) 23, an auxiliary storage unit 24, an operation panel 25, a printing unit 26, a communication interface (communication I/F) 27, a near-field communication (NFC) unit 28, and a bus 29.

The receipt printer 20, the CPU 21, the ROM 22, the RAM 23, and the auxiliary storage unit 24 are connected by the bus 29 to one another, and may be implemented as a computer controlling the receipt printer 20.

The CPU 21 may be a processor of the above-described computer. Based on an operating system, middleware, and an application program, which are stored in the ROM 22 and the RAM 23, the CPU 21 controls the receipt printer 20 in order to realize various operations by the receipt printer 20.

The ROM 22 may be a non-volatile storage device of the above-described computer. The above-described operating system is stored in the ROM 22. In some cases, the above-described middleware or application program may be stored in the ROM 22. In some cases, data that the CPU 21 refers to while performing various types of processing is stored in the ROM 22.

The RAM 23 may be a volatile storage device of the above-described computer. Data that the CPU 21 refers to while performing various types of processing is stored in the RAM 23. Additionally, data that the CPU 21 temporarily uses when performs various types of processing is stored in the RAM 23. That is, the RAM 23 is used as a so-called work area.

The auxiliary storage unit 24 may be an auxiliary storage device of the above-described computer. The auxiliary storage unit 24 retains data that the CPU 21 uses while performing various types of processing, or data that is generated by the processing by the CPU 21. In some cases, the middleware or the application program, which is described above, may be stored in the auxiliary storage unit 24. As the auxiliary storage unit, an electrically erasable programmable read-only memory (EEPROM), a hard disk drive, a solid state drive (SSD), or the like can be used. In some cases, the middleware or the application program, which is described above, is stored in the auxiliary storage unit 24. It is noted that the auxiliary storage unit 24 is not necessarily included in the receipt printer 20.

The operation panel 25, as illustrated in FIG. 1, is included on a front surface of the receipt printer 20. The operation panel 25 includes an operation button for operating the receipt printer 20 and a display device for display an operation state of the receipt printer 20.

The printing unit 26 prints images such as character strings on a sheet of receipt paper. The printing unit 26, for example, may have well-known configuration including, for example, a thermal-type printing head and a transport mechanism that transports the sheet of receipt paper. A receipt is formed by the printing unit 26 by printing the details of the transaction the sheet of receipt paper, which is then discharged from a discharge port 20a (illustrated in FIG. 1(to the outside of the receipt printer 20. The printing head may be any other type of printing head, such as, for example, a dot-impact type head or an inkjet type head.

The communication interface 27 connects the registration apparatus 10 to the CPU 21 for transmission and reception of data. As the communication interface 27, for example, a well-known device in compliance with a specification, such as a universal serial bus (USB) or a RS-232C may be used.

The NFC unit 28 includes an antenna 28a positioned facing an upper surface of the receipt printer 20 as illustrated in Fig. 1. The NFC unit 28 performs wireless communication between the receipt printer and the information terminal 30 that is located close to the antenna 28a, according to an NFC protocol.

The bus 29 connects the CPU 21, the ROM 22, the RAM 23, the auxiliary storage unit 24, the operation panel 25, the printing unit 26, and the communication interface 27, and the NFC unit 28 with one another.

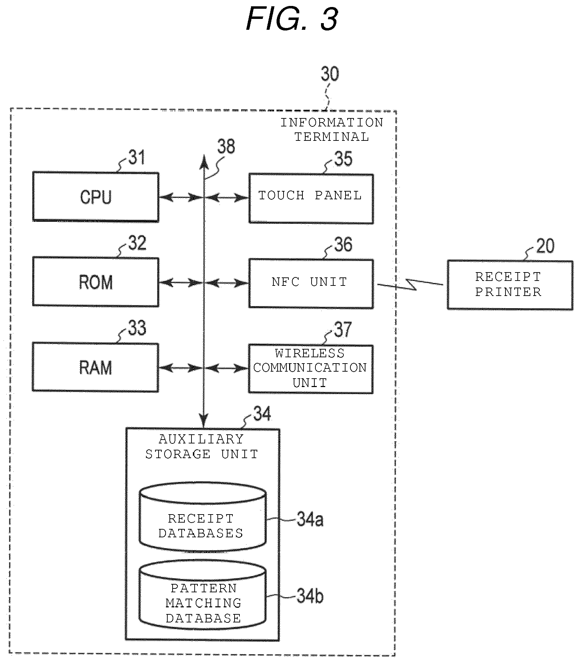

Fig. 3 is a block diagram illustrating an example configuration of the information terminal 30.

The information terminal 30 includes a CPU 31, a ROM 32, the RAM 33, an auxiliary storage unit 34, a touch panel 35, an NFC unit 36, a wireless communication unit 37 and a bus 38.

In the information terminal 30, the CPU 31, the ROM 32, the RAM 33, and the auxiliary storage unit 34 are connected by the bus 38 to one another, and may be implemented as a computer. A ready-made smartphone or the like, for example, may be used as the information terminal 30.

The CPU 31 may be a processor of the above-described computer. Based on an operating system, middleware, and an application program, which are stored in the ROM 32 and the RAM 33, the CPU 31 controls the information terminal 30 in order to realize various operations by the information terminal 30.

The ROM 32 may be a non-volatile storage device of the above-described computer. The above-described operating system is stored in the ROM 32. In some cases, the above-described middleware or application program may be stored in the ROM 32. In some cases, data that the CPU 31 refers to while performing various types of processing is stored in the ROM 32.

The RAM 33 may be a volatile storage device of the above-described computer. Data that the CPU 31 refers to while performing various types of processing may be stored in the RAM 33. Additionally, data that the CPU 31 temporarily uses when performs various types of processing is stored in the RAM 33. The RAM 33 is used as a so-called work area.

The auxiliary storage unit 34 may be an auxiliary storage device of the above-described computer. The auxiliary storage unit 34 is, for example, an EEPROM, or the like, and retains data that the CPU 31 uses while performing various types of processing, or data that is generated by the processing by the CPU 31. In some cases, the middleware or the application program, described above, is stored in the auxiliary storage unit 34. The auxiliary storage unit 34 stores a receipt database 34a and a pattern matching database 34b. The electronic receipt data is stored in the receipt database 34a in an accumulated manner. The pattern matching database 34b includes various categories associated with character strings that may be included in the electronic receipt data.

The application program that is stored in the ROM 32 or the auxiliary storage unit 34 includes a control program for a control processing that will be described below. It is noted that generally, the information terminal 30 may be delivered to a user in a state where the control program is not stored in the ROM 32 or the auxiliary storage unit 34. Then, the control program is delivered to the user on a removable recording medium or through a network, and the delivered control program is written to the auxiliary storage unit 34 of the information terminal 30 described above. However, the information terminal 30 may be delivered to the user in a state where the control program is stored in the ROM 32 or the auxiliary storage unit 34. Then, as the recording medium, a magnetic disk, a magnetic optical disk, an optical disk, a semiconductor memory, or the like can be used. The pattern matching database 34b is typically set up in the auxiliary storage unit 34 as a part of an operation of writing the control program described above. The pattern matching database 34b may be set up at an arbitrary timing. Furthermore, the pattern matching database 34b may be updated at an arbitrary timing after the setup is completed. In this case, required update data is provided on a removable recording medium or through a network.

The touch panel 35 functions as an input device and display device of the information terminal 30.

In a case where the information terminal 30 is moved towards the antenna 28a as indicated by an arrow in Fig. 1, the NFC unit 36 performs the wireless communication in compliance with the NFC scheme between the NFC unit 36 and the NFC unit 28 of the receipt printer 20.

The wireless communication unit 37 is an interface for data communication over a mobile communication network (not illustrated). As the wireless communication unit 37, a well-known communication device for performing the data communication over the mobile communication network can be used.

The bus 38 connects the CPU 31, the ROM 32, the RAM 33, the auxiliary storage unit 34, the touch panel 35, and the NFC unit 36, and the wireless communication unit 37 to one another.

Next, operation of the accounting system 100 that is configured as set forth above is described. It is noted that a variety of types of processing can be suitably used to achieve the same result.

In the registration apparatus 10, registration processing relating to the transaction is performed. Furthermore, payment is made in the registration apparatus 10 with respect to the transaction. Specifically, for the transaction that is purchase and sale of merchandise, the registration apparatus 10 registers merchandise and generates a list of the merchandise for each transaction. Then, after completion of the above-described registration, the registration apparatus 10 performs processing for making a payment for the purchase merchandise that is included in the list. It is noted that, the transaction is assumed to be purchase and sale of merchandise between a store and a shopper. However, the transaction may be any other type of transaction for which a receipt is generated.

When the payment is completed, the registration apparatus 10 requests the receipt printer 20 to print a receipt expressing the detail of the transaction as character strings.

This request is received in the communication interface 27.

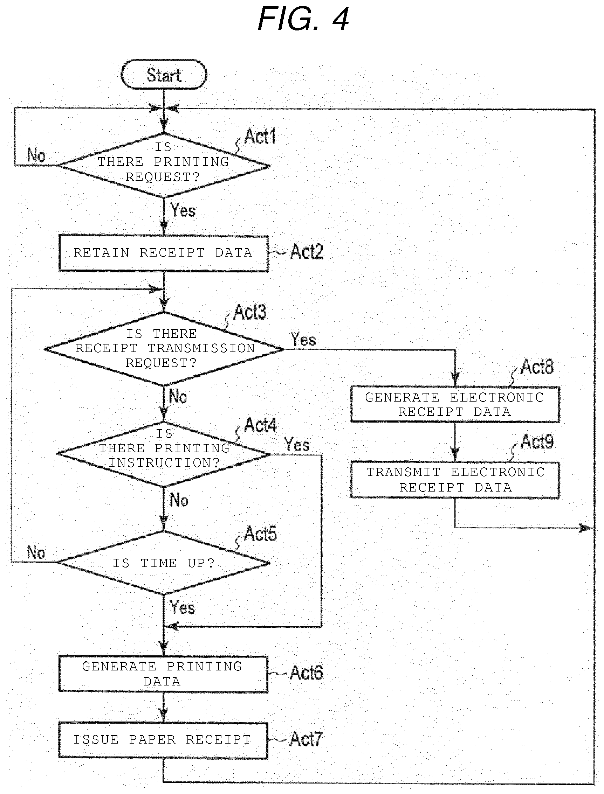

Fig. 4 is a flowchart of an example sequence of operations performed by the CPU 21.

In Act 1, the CPU 21 waits for the printing request described above to be made. If the printing request described above is received in the communication interface 27, the CPU 21 determines that the result is YES, and proceeds to Act 2.

In Act 2, the CPU 21 causes the receipt data, which is received by the communication interface 27, to be stored in the RAM 23 or the auxiliary storage unit 24. The receipt data includes character strings expressing the detail of the transaction. Specifically, the receipt data includes character strings that represent, for example, a store name, a date, a time, a merchandise name, a price, a sub-total amount, a consumption tax, a total amount, an amount received, a change amount, or the like. The format of the character strings included as data in the receipt data is arbitrary. The receipt data is typically a set of character codes that represent character of the character string. However, the receipt data may include, for example, image data that expresses a character string as an image. Accordingly, the CPU 21 performs the control processing that is based on the control program, and thus the computer with the CPU 21 functions as an acquisition unit that acquires the receipt data that is transaction information which expresses the detail of the transaction using character strings.

In Act 3, the CPU 21 checks whether or not receipt transmission is requested. Then, if the receipt transmission is not requested, the CPU 21 determines that a result is No, and proceeds to Act 4. In Act 4, the CPU 21 checks whether or not a print instruction is provided. If the print instruction that results from a predetermined button operation or the like in the operation panel 25 is not provided, the CPU 21 determines that a result is No, and proceeds to Act 5.

The CPU 21 in Act 5 checks whether or not a predetermined time is expired. Then, if the predetermined time is not expired, the CPU 21 returns to Act 3.

As such, in Act 3 to Act 5, the CPU 21 waits until the receipt transmission is requested, the print instruction is provided, or the predetermined time is expired.

In a case where the shopper requests a paper receipt, a salesperson that is an operator of the registration apparatus 10 provides the print instruction by operating a button that is included in the operation panel 25 in advance, or the like. In response to the operation, the CPU 21 determines Yes in Act 4, and proceeds Act 6.

It is noted that if an elapsed time in a waiting state in Act 3 to Act 5 reaches the predetermined time, the CPU 21 determines Yes in Act 5. Then, in this case, the CPU 21 also proceeds to Act 6.

Based on the receipt data, in Act 6, the CPU 21 generates print data necessary for the printing unit 26 to print character strings that represent the details of the transaction on a sheet of receipt paper.

In Act 7, the CPU 21 sends the print data described above to the printing unit 26, and issues a paper receipt by causing the printing unit 26 to perform printing according to the print data. Then, subsequently, the CPU 21 returns to the waiting state in Act 1. As such, the CPU 21 performs the control processing that is based on the control program, and thus functions as a control unit (a printing control unit) that controls the printing unit 26 in such a manner that printing is performed to issue the receipt.

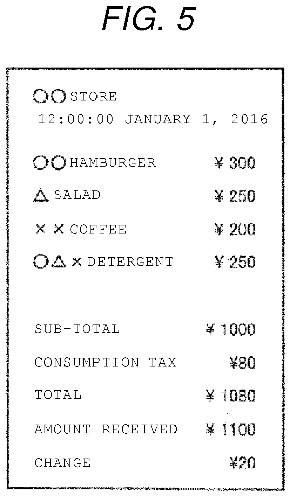

Fig. 5 illustrates an example of the paper receipt.

In a case where the shopper requests an electronic receipt, when the CPU 21 is in the waiting state in Act 3 to Act 5, the salesperson instructs the shopper to move the information terminal 30 towards the receipt printer 20, as indicated by the arrow in Fig. 1. According to this instruction, when the shopper places the information terminal 30 near the receipt printer 20, communication is available between the NFC unit 28 and the NFC unit 36.

At this time, the shopper keeps the information terminal 30 in a state such that the CPU 31 can communicate with the receipt printer 20. Alternatively, according to the availability of the communication between the NFC unit 28 and the NFC unit 36, the CPU 31 may automatically start communicating with the receipt printer 20 by running an operating system or firmware.

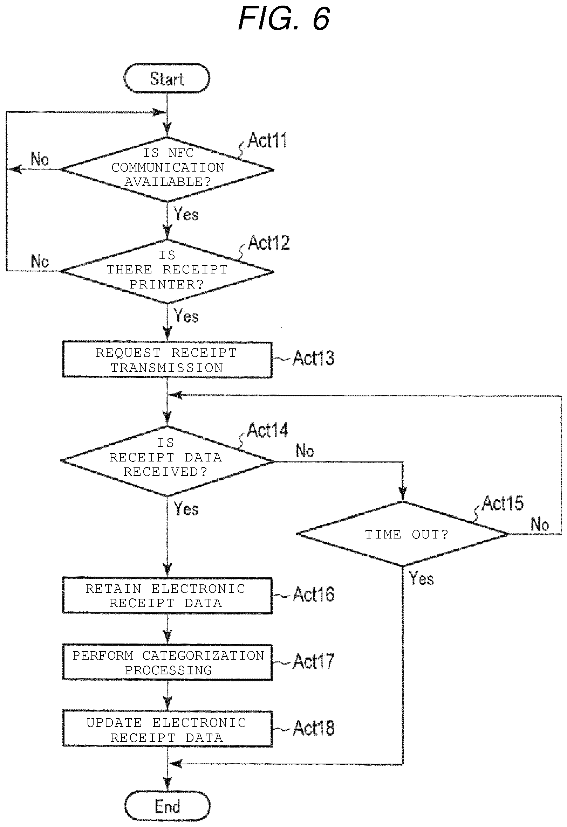

Fig. 6 is a flowchart of an example sequence of operations performed by the CPU 31.

In Act 11, the CPU 31 waits until NFC communication by the NFC unit 36 is available. Then, if the NFC communication is available, the CPU 31 determines Yes in Act 11, and proceeds to Act 12.

In Act 12, the CPU 31 checks whether or not communication is available between the NFC unit 36 and the receipt printer 20. Then, if communication with the receipt printer 20 is not available, the CPU 31 returns to Act 11. As such, in Act 11 and Act 12, the CPU 12 waits until the NFC communication with the receipt printer 20 is available. Then, if the communication, as described above, is available between the NFC unit 28 and the NFC unit 36, the CPU 31 determines Yes in Act 12 that a result, and proceeds to Act 13.

In Act 13, the CPU 31 makes a request to the receipt printer 20 for the receipt transmission. This request is wirelessly transmitted from the NFC unit 36, and is received by the NFC unit 28.

At this time, in the receipt printer 20, the CPU 21 is in a waiting state in Act 3 to Act 5 in Fig. 4. Then, if the request for the receipt transmission is received by the NFC unit 28, the CPU 21 determines Yes in Act 3, and proceeds to Act 8.

In Act 8, the CPU 21 generates the electronic receipt data based on the receipt data that is received in Act 2. For the electronic receipt data, the CPU 21 sets the character strings representing the details of the transaction, which are expressed by the receipt data, to be a set of character codes. For example, if the receipt data includes the set of character codes, the CPU 21 may include the set of character codes, without change, in the electronic receipt data. Furthermore, if the receipt data includes image data, the CPU 21 converts the image data into a set of character codes by performing well-known character recognition processing, and then generates the electronic receipt data as data that includes the set of character codes. It is noted that the CPU 21 includes the set of character codes that correspond to all the character strings representing the details of the transaction, in the electronic receipt data. However, the CPU 21 may not include the set of character codes that correspond to some of the character strings expressed by the receipt data, in the electronic receipt data. Furthermore, the CPU 21 may include a set of character codes that corresponds to character strings other than the character strings expressed by the receipt data, in the electronic receipt data. The data the electronic receipt data is specifically set to be may be arbitrarily decided by a designer or the like of the receipt printer 20.

In Act 9, the CPU 21 wirelessly transmits the electronic receipt data, which is generated as describe above, from the NFC unit 28. Accordingly, the CPU 21 functions as a transmission unit that wirelessly transmits the electronic receipt data (which includes the set of character codes that represents at least some of the character strings expressed by the transaction information), in cooperation between the CPU 21 and the NFC unit 28. Then, if the transmission is completed, the CPU 21 returns to the waiting state in Act 1.

In this manner, by performing processing in Act 3 to Act 5, the CPU 21 decides a receipt outputting method as one of a first method of outputting the paper receipt, and a second method in which the electronic receipt is output. As such, the CPU 21 performs the control processing that is based on the control program, and functions as a decision unit that makes the decision described above.

Now, the CPU 31 of the information terminal 30 requests the receipt transmission in Act 13, and then proceeds to Act 14.

In Act 14, the CPU 31 checks whether or not the receipt data is received by the NFC unit 36. Then, if the receipt data is not received, the CPU 31 determines No in Act 14, and proceeds to Act 15.

In Act 15, the CPU 31 checks whether or not a predetermined time has elapsed. Then, if the predetermined time has not elapsed, the CPU 31 returns to Act 14.

As such, in Act 14 and Act 15, the CPU 31 waits until the receipt data is received or the predetermined time has elapsed. If the predetermined time elapses in the waiting state in Act 14 and Act 15, the CPU 21 determines Yes in Act 15. Then, in this case, the CPU 31 ends the processing in Fig. 6. At this time, the CPU 31 may perform a report operation for notifying the shopper that the electronic receipt data cannot be normally received.

When, in response to the request for the receipt transmission in Act 13, the CPU 31, as described above, causes the electronic receipt data to be wirelessly transmitted from the NFC unit 28 of the receipt printer 20. The NFC unit 36 receives the electronic receipt data. Therefore, the NFC unit 36 functions as a reception unit. If the electronic receipt data is received in this manner, the CPU 31 determines in Act 14 that a result is Yes, and proceeds to Act 16.

In Act 16, the CPU 31 causes the electronic receipt data, which is received by the NFC unit 36, to be added to the receipt database 34a.

In Act 17, the CPU 31 performs categorization processing on the electronic receipt data. The categorization processing classifies the character strings included the electronic receipt data. A specific detail of the categorization processing may be arbitrary, but an example thereof is described as follows.

The CPU 31 extracts each of the character strings that are expressed in the electronic receipt data. For example, if the details of the transaction expressed in the paper receipt which is illustrated in Fig. 5 is also expressed in the electronic receipt data, the CPU 31 extracts character strings, such as "OO store", "January 1, 2016", "12:00:00", "OO hamburger", "\ 300", "Δ salad", and "\ 250".

Next, the CPU 31 determines a category of each of the extracted character strings, which is described above, with reference to the pattern matching database 34b.

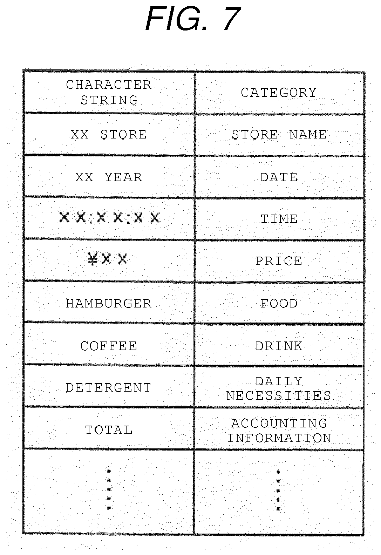

Fig. 7 is a diagram illustrating an example of the pattern matching database 34b.

In the example in Fig. 7, for example, a category of a character string that includes "XX store" indicates "store name", and a category of a character string that includes "hamburger" indicates "food". It is noted that "XX" indicates an arbitrary character string.

The CPU 31 determines the character strings, "OO store", "January 1, 2016", "12:00:00", "OO hamburger", "\ 300", and "Δ salad", and "\ 250", as categories, "store name", "date", "time", "food", "price", "food", and "price", respectively.

As such, the CPU 31 performs the control processing that is based on the control program, and thus functions a categorization unit that categorizes character strings that are expressed by information which is included in the electronic receipt data.

In Act 18, the CPU 31 updates the electronic receipt data that is stored in the receipt database 34a in such a manner that a result of the categorization is reflected. More precisely, the CPU 31 updates the electronic receipt data that is stored in the receipt database 34a with data that expresses a category of the character string, in a state of being associated with each character string originally expressed in the electronic receipt data. As such, the CPU 31 performs the control processing that is based on the control program, and thus functions as a storage control unit that causes the received information to be stored in the auxiliary storage unit 34 in association with the result of the categorization. Furthermore, the function as the storage unit is accomplished by the function of the CPU 31 in cooperation with the auxiliary storage unit 34. Then, if the update is finished, the CPU 31 ends the processing that is illustrated in Fig. 6.

In a case where the shopper wants to check a detail of the transaction, the user causes information terminal 30 to be in a state where the CPU 31 can perform the control processing described next.

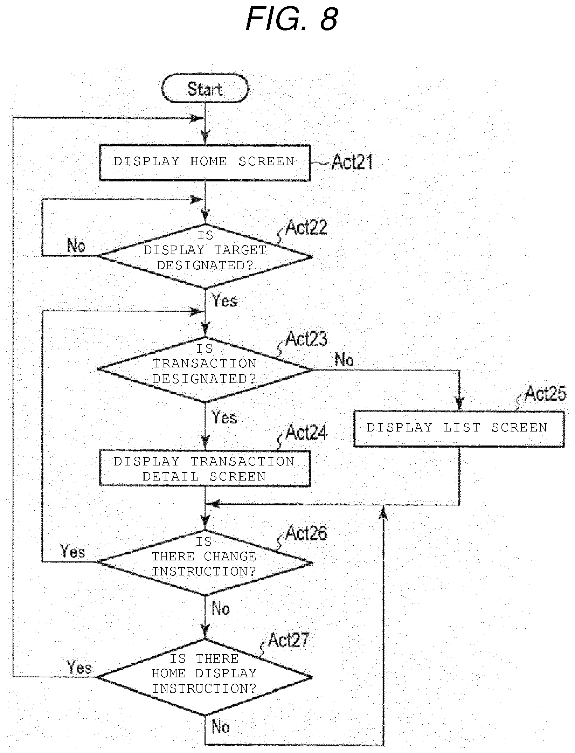

Fig. 8 is a flowchart of control processing by the CPU 31 for causing the transaction details to be checked by the operator.

In Act 21, the CPU 31 causes a home screen to be displayed on the touch panel 35. The home screen allows a transaction or a category to be designated by the operator for detailed display. For example, a list of pieces of electronic receipt data that are stored in the receipt database 34a and a list of categories that are described in the pattern matching database 34b are displayed on the home screen.

In Act 22, the CPU 31 waits until the transaction or the category is designated by the operator. If a transaction or a category is designated by an operation in the touch panel 35, the CPU 31 determines Yes in Act 22, and proceeds to Act 23.

In Act 23, the CPU 31 checks whether or not one transaction is designated. Then, if one transaction is designated, the CPU 31 determines Yes in Act 23, and proceeds to Act 24.

In Act 24, the CPU 31 generates a transaction detail screen based on the electronic receipt data relating to the designated transaction, and causes the transaction detail screen to be displayed on the touch panel 35.

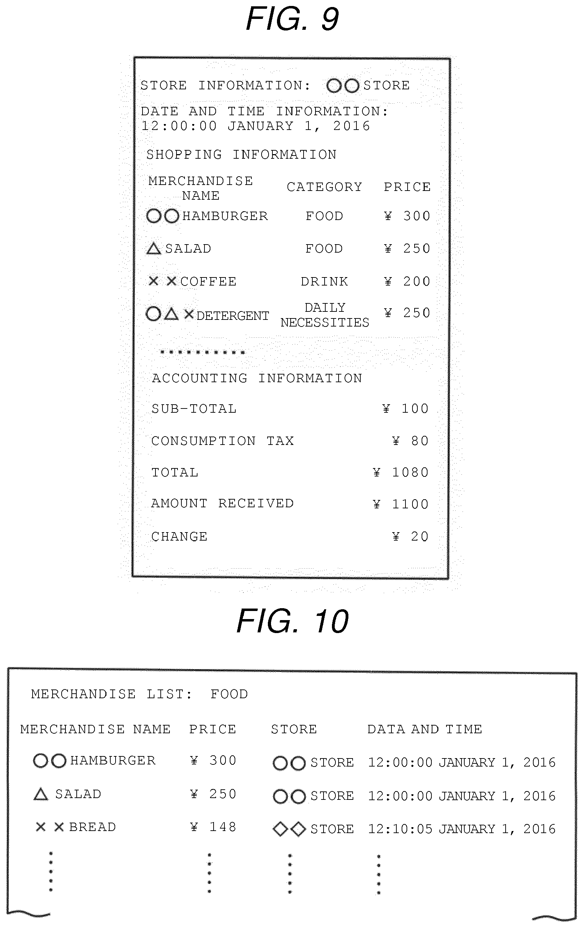

Fig. 9 illustrates an example of the transaction detail screen.

The transaction detail screen that is illustrated in Fig. 9 relates to a transaction in which a paper receipt in Fig. 5 is printed. However, the electronic receipt data that serves a basis for the transaction detail screen is updated in Act 18, and includes the result of the categorization in Act 17. For this reason, in addition to the information that is shown on the paper receipt which is illustrated in Fig. 5, the result of the categorization in Act 17 is displayed on the transaction detail screen that is illustrated in Fig. 9. It is noted that the format of the transaction detail screen may be arbitrarily decided by a creator or the like of the control program for the CPU 31.

In contrast, if category is designated when the CPU 31 is in the waiting state in Act 22, the CPU 31 determines No in Act 23, and proceeds to Act 25.

In Act 25, the CPU 31 generates a list screen, and causes the list screen to be displayed on the touch panel 35. As an example, the CPU 31 generates the list screen in the following procedures:
(1) The CPU 31 sets electronic receipt data, which is consistent with a condition that is determined in advance, among pieces of electronic receipt data that are stored in the receipt database 34a, to be target data. The condition may be, "all pieces of electronic receipt data that are stored in the receipt database 34a", "inclusion of a date and time within the last one month", or the like, but may be arbitrary. The condition, for example, may be decided arbitrarily by the creator of the control program for the CPU 31 or an operator of the information terminal 30.
(2) The CPU 31 extracts, from the target data, all character strings corresponding to the designated category.
(3) The CPU 31 extracts, from the target data, a character string that has a relationship with a previously extracted character string.
(4) The character string that is extracted in (2) described above is set to be a heading. A list that shows the character strings, which are extracted as having the relationship in (3) described above, in association with each heading, is created. The list screen on which the list is displayed is generated.

Fig. 10 is a diagram illustrating an example of the list screen in a case where "food" as a category is designated.

As described above, the information that is included in the received electronic receipt data is displayed on the transaction detail screen and the list screen, in association with the result of the categorization. As such, the CPU 31 performs the control processing that is based on the control program, and functions as a display unit in cooperation with the touch panel 35.

The CPU 31 causes any one of the screens to be displayed in Act 24 or Act 25, and proceeds to Act 26.

In Act 26, the CPU 31 checks whether or not an instruction for changing the transaction or the category that is a target for the display of the detail is provided. Then, if the instruction is not provided, the CPU 31 determines No in Act 26, and proceeds to Act 27.

In Act 27, the CPU 31 checks whether or not an instruction for displaying the home screen is provided. Then, if the instruction is not provided, the CPU 31 determines No in Act 27, and returns to Act 26.

As such, in Act 26 and Act 27, the CPU 31 waits until an instruction for changing a display target or changing the display screen to the home screen is provided. Then, when the CPU 31 is in the waiting state, if a new transaction or category that is a target for the display of the detail is designated by the operation in the touch panel 35, the CPU 31 determines Yes in Act 26, and returns to Act 23. In this manner, the CPU 31 performs Act 23 and Act 24, or Act 25 in the same manner as described above, and thus changes the display on the touch panel 35 to the transaction detail screen or the list screen in accordance with the newly designated transaction or category. Furthermore, when the CPU 31 is in the waiting state in Act 26 and Act 27, if the instruction for displaying the home screen is provided by the operation in the touch panel 35, the CPU 31 determines Yes in Act 27, and returns to Act 21. In this manner, the CPU 31 performs Act 21 in the same manner as described above, and returns the display of the touch panel 35 to the home screen.

As described above, in the accounting system 100, the electronic receipt data is directly wirelessly transferred from the receipt printer 20 to the information terminal 30 through the NFC communication. Then, retention of the electronic receipt data, categorization of pieces of information that are included in the electronic receipt data, and retention of the result of the categorization are performed in the information terminal 30. Therefore, there is no need to use an electronic receipt server as in an existing electronic receipt system, and with a considerably simpler configuration than in the existing electronic receipt system. In other words, the details of the transaction are stored in the information terminal 30. What is more, because the electronic receipt data includes the character string that represents the details of the transaction, as a set of character codes, it is possible that the information is easily categorized.

Furthermore, the information terminal 30 can display the transaction detail screen and the list screen with the result of the categorization. Accordingly, a user of the information terminal 30 is able to check the details of the transaction with the information terminal 30. It is noted that, on the transaction detail screen, at least a portion of the result of the categorization is displayed to show details of one transaction based on the electronic receipt data. Therefore, with the display of the transaction detail screen, the user of the information terminal 30 is able to know the detail of the transaction in one-time shopping, such as what category the purchased merchandise belongs to. Furthermore, the information that correlates with the designated category is displayed on the list screen. Therefore, with the display of the list screen, the user of the information terminal 30 is able to know a record of the transaction relating to a certain category.

Various modification embodiments of the embodiment are possible as follows.

The detail of the electronic receipt data that is stored in the receipt database 34a may be output from an apparatus other than the information terminal 30 without the function of performing the control processing illustrated in Fig. 8, being included. For example, necessary information that is included in the electronic receipt data may be transmitted by the wireless communication unit 37 to another apparatus that is connected through a mobile communication network. Alternatively, through the NFC communication, the necessary information that is included in the electronic receipt data may be transmitted to the receipt printer 20 in order to be printed.

The pattern matching database 34b may be stored, for example, in a store server or the like without being stored in the auxiliary storage unit 34. In this case, the CPU 31, for example, may access the store server described above or the like through the mobile communication network from the wireless communication unit 37, and may refer to the pattern matching database 34b that is stored in the store server or the like.

It is also possible that a merchandise sales data processing apparatus is provided and equipped with the function of the registration apparatus 10 and the function of the receipt printer 20.

It is possible that a well-known communication protocol other than the NFC protocol is used for wireless communication between the receipt printer 20 and the information terminal 30.

At least one of the receipt printer 20 and the information terminal 30 may be externally attached without having a built-in NFC unit 28 or 36, or a built-in antenna thereof.

The CPU 21 may perform both of Act 6 and Act 7, and Act 8 and Act 9, and may issue the paper receipt and transmit the electronic receipt data. In this case, the print data and the electronic receipt data may be generated at a time at which Act 2 is performed.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

## Claims

1. An accounting system comprising:
a receipt printer having a first processor, a printing unit, and one or more first communication interfaces, the first processor being configured to control the printing unit and the one or more first communication interfaces to:
receive transaction information including character strings representing details of a transaction,
determine a method of outputting a receipt of the transaction from one of at least a first method and a second method,
if the determined method of outputting is the first method, print a receipt of the transaction, including the character strings, on a printing medium, and
if the determined method of outputting is the second method, generate and transmit electronic receipt data which includes a set of character codes that represents at least one of the character strings included in the transaction information; and
an information processing apparatus having a second processor, a storage unit, a display, and one or more second communication interfaces, the second processor being configured to control the storage unit, the display, and the one or more second communication interfaces to:
receive the electronic receipt data transmitted from the receipt printer,
determine a category of the at least one of the character strings represented by the set of character codes included in the electronic receipt data received from the receipt printer,
store the set of character codes included in the electronic receipt data received from the receipt printer in association with the determined category, and
display details of the transaction including the determined category.

2. The system according to claim 1, wherein the one or more first communication interfaces include:
a network interface through which the transaction information is received, and
a wireless interface through which the electronic receipt data is received.

3. The system according to claim 1 or 2, wherein:
the storage unit stores a pattern matching database which stores categories in association with character strings, and
the second processor searches the pattern matching database to determine the category of the at least one of the character strings represented by the set of character codes included in the electronic receipt data received from the receipt printer.

4. The system according to any one of claims 1 to 3, wherein, in response to an input selecting the determined category, the second processor controls the display to display a detail of a previous transaction based on previous electronic receipt data.

5. The system according to any one of claims 1 to 4, wherein the second processor determines the category by communicating with a server that stores a pattern matching database which stores categories in association with character strings.

6. An information processing apparatus comprising:
a processor;
a storage unit;
a display; and
one or more first communication interfaces, the processor being configured to control the storage unit, the display, and the one or more first communication interfaces to:
request electronic receipt data representing a transaction,
in response to the request, receive the electronic receipt data which includes a set of character codes that represents at least one of a plurality of character strings representing details of the transaction,
determine a category of the at least one of the plurality of character strings represented by the set of character codes included in the received electronic receipt data,
store the set of character codes included in the received electronic receipt data in association with the determined category, and
display details of the transaction including the determined category.

7. The apparatus according to claim 6, wherein the one or more first communication interfaces include a wireless interface through which the electronic receipt data is received.

8. The apparatus according to claim 6 or 7, wherein:
the storage unit stores a pattern matching database which stores categories in association with character strings, and
the processor searches the pattern matching database to determine the category of the at least one of the character strings represented by the set of character codes included in the received electronic receipt data.

9. The apparatus according to any one of claims 6 to 8, wherein, in response to an input selecting the determined category, the processor controls the display to display a detail of a previous transaction based on previous electronic receipt data.

10. The apparatus according to any one of claims 6 to 9, wherein the processor determines the category by communicating with a server that stores a pattern matching database which stores categories in association with character strings.

11. A non-transitory computer-readable medium storing instructions causing an information processing apparatus to perform the steps of:
requesting electronic receipt data representing a transaction;
in response to the request, receiving the electronic receipt data which includes a set of character codes that represents at least one of a plurality of character strings representing details of the transaction;
determining a category of the at least one of the character strings represented by the set of character codes included in the received electronic receipt data;
storing the set of character codes included in the received electronic receipt data in association with the determined category; and
displaying details of the transaction including the determined category.

12. The non-transitory computer-readable medium according to claim 11, wherein electronic receipt data is requested and received via a wireless interface.

13. The non-transitory computer-readable medium according to claim 11 or 12, wherein the instructions further cause the information processing apparatus to perform the step of:
storing a pattern matching database which stores categories in association with character strings, the category being determined by searching the pattern matching database.

14. The non-transitory computer-readable medium according to any one of claims 11 to 13, wherein the instructions further cause the information processing apparatus to perform the steps of:
receiving an input selecting the determined category; and
in response to the input, display a detail of a previous transaction based on previous electronic receipt data.

15. The non-transitory computer-readable medium according to any one of claims 11 to 14, wherein the information processing device determines the category by communicating with a server that stores a pattern matching database which stores categories in association with character strings.
